# FASCICULE DE BREVET EUROPEEN

(11) **EP 3 816 703 B1**
(45) Date de publication et mention de la délivrance du brevet: **23.02.2022**
(21) Numéro de dépôt: 20192674.8
(22) Date de dépôt: 25.08.2020
(51) Int. Cl.: B64D 43/00, B64D 45/00, G02B 27/01, G02B 27/00

(54) **PROCEDE D'AIDE AU PILOTAGE D'UN AERONEF**
HILFSVERFAHREN ZUR STEUERUNG EINES LUFTFAHRZEUGS
METHOD TO ASSIST PILOTING OF AN AIRCRAFT

(30) Priorité: 31.10.2019 FR 1912264
(43) Date de publication de la demande: 05.05.2021
(73) Titulaire: Airbus Helicopters, 13725 Marignane Cedex (FR)
(72) Inventeur: ASTRUC, Joël, 13540 PUYRICARD (FR); LUCAS, Romain, 13127 VITROLLES (FR)
(74) Mandataire: GPI Brevets

(56) Documents cités:
- US-A1- 2014 160 014
- US-A1- 2018 088 323
- US-A1- 2018 334 262
- US-A1- 2019 250 408
- US-B1- 9 766 465

## Description

La présente invention concerne un système et un procédé d'aide au pilotage d'un aéronef, et par exemple d'un giravion.

Plus particulièrement, le système d'aide au pilotage se trouve dans le domaine technique des dispositifs configurés pour afficher des informations sur un afficheur porté par la tête d'un pilote.

Un aéronef peut être muni de divers afficheurs pour afficher des informations utiles pour un pilote. Parmi ces informations, l'homme du métier distingue des informations dites « primaires » et des informations dites « secondaires ».

Les informations primaires sont relatives à des informations de pilotage à court terme, voire à des informations essentielles de pilotage. Les informations de pilotage à court terme peuvent comprendre notamment au moins un angle d'attitude de l'aéronef, un cap suivi, une vitesse air de l'aéronef, une vitesse ascensionnelle par exemple mesurée avec un variomètre, une altitude barométrique de l'aéronef, une hauteur de l'aéronef par exemple mesurée avec une radiosonde, un facteur de charge de l'aéronef, des données de navigation, une information de première limitation d'une source motrice de l'aéronef, voire des alarmes éventuelles. Par exemple, un afficheur d'informations primaires à court terme peut afficher un symbole de vecteur vitesse, une échelle d'assiette, une échelle d'altitude, une échelle de vitesse et une échelle de roulis, un cap et diverses alarmes. Les informations de pilotage essentielles comprennent les informations de pilotage à court terme et des informations complémentaires jugées essentielles pour le pilotage d'un aéronef donné, telles que par exemple une vitesse de rotation d'une voilure tournante sur un giravion, une quantité de carburant restant dans l'aéronef et des messages d'alerte.

Les informations secondaires regroupent toutes les autres informations affichables et par exemple des données météorologiques, des données d'établissement d'une route à suivre, des données relatives à des pressions et/ou des températures d'huile, des pressions et/ou des températures de gaz, des indications relatives à une source d'énergie électrique telles qu'un ampérage ou un voltage, des pressions de carburant, des pressions de pneus, le volume de carburant contenu dans chaque réservoir, des données relatives à la de sortie d'un train d'atterrissage, des images provenant d'une caméra de surveillance, des données relatives à un treuil embarqué...

Pour présenter ces diverses informations à un pilote, un aéronef peut comprendre divers afficheurs redondés notamment dans un but de sécurité.

A cet effet, un poste de pilotage d'un aéronef comprend usuellement une planche de bord et un pupitre.

On rappelle que lorsque le pilote regarde l'environnement extérieur situé au dessus d'une planche de bord, il est courant d'indiquer qu'il se trouve dans une position « tête haute ». A l'inverse, lorsque le pilote regarde l'intérieur du cockpit et notamment la planche de bord ou le pupitre, il est courant d'indiquer que le pilote se trouve dans une position « tête basse ». Le terme « pilote » utilisé sans autre précision peut aussi bien désigner un pilote qu'un copilote, voire tout individu présent dans le poste de pilotage.

Dans ce contexte, un aéronef peut comprendre un ou plusieurs afficheurs de type « écran multifonction » disposés sur la planche de bord et/ou le pupitre d'un poste de pilotage. Pour observer les écrans multifonctions de la planche de bord ou du pupitre, un pilote est donc dans une position tête basse. Par exemple, sur un aéronef « monopilote » deux écrans multifonctions sont visibles par le pilote. Selon un autre exemple, sur un aéronef « bipilote » deux écrans multifonctions sont disposés en face du pilote et deux écrans multifonctions sont disposés en face du copilote. Selon un autre exemple, sur un aéronef « bipilote » un écran multifonction est disposé en face du pilote et un écran multifonction est disposé en face du copilote, un troisième écran multifonction étant agencé latéralement entre le pilote et le copilote.

Un écran multifonction peut afficher diverses pages contenant chacune diverses informations. Ainsi, un écran multifonction peut afficher une page contenant les informations primaires et une ou plusieurs pages contenant des informations secondaires. Un pilote peut choisir la page à afficher.

Un aéronef peut aussi comprendre un afficheur pouvant être porté par la tête d'un pilote. Un tel afficheur peut être qualifié de « afficheur porté » par opposition à un écran multifonction disposé sur une planche de bord ou un pupitre. Un afficheur porté peut comprendre par exemple un système dénommé « head mounted display » en langue anglaise, un système dénommé « head worn display », un système dénommé « near eye display » en langue anglaise ou encore un système dénommé « Helmet Mounted Display » lorsque monté sur un casque voire un système dénommé par exemple « Helmet Mounted Sight & Display ».

L'afficheur porté peut ainsi afficher une image présentant les informations primaires devant les yeux du pilote lorsque le pilote est dans une position tête haute. Un afficheur porté permet alors de fournir à un pilote les informations primaires dans la position tête haute en les superposant à la vue extérieure, là où le pilote prend les références visuelles indispensables au pilotage à vue de son aéronef. Le pilote peut alors prendre connaissance des informations primaires sans avoir à quitter des yeux le champ de vue extérieur. De plus, l'afficheur porté peut collimater les images affichées à l'infini ou du moins à une distance bien supérieure à la distance le séparant de la planche de bord pour que le pilote n'ait pas une mise au point oculaire à effectuer afin de passer de la vue extérieure à la lecture des informations affichées sur l'afficheur porté.

Lorsque le pilote passe dans la position tête basse, un dispositif inhibe l'affichage d'informations sur l'afficheur porté. Cette caractéristique permet d'éviter que des informations affichées sur l'afficheur porté perturbent la lecture notamment des écrans multifonctions disposés sur la planche de bord et/ou le pupitre.

Dans ce contexte, les écrans de la planche de bord sont usuellement configurés pour afficher les informations secondaires et les informations primaires au choix. L'afficheur porté affiche les informations primaires pertinentes pour le pilotage à chaque instant et cela en position tête haute.

Un tel aéronef est intéressant dans la mesure où cet aéronef offre divers moyens d'accès aux informations primaires pour le pilote. Néanmoins, la planche de bord limite de fait le champ visuel du pilote vers l'extérieur et entrave un vol à vue.

Le document US 9766465 décrit un système muni d'un afficheur tête haute et de sources d'images. Lorsqu'un pilote regarde vers une source d'images alors l'afficheur tête haute peut afficher des informations associées à cette source d'images lorsque la source d'images est un écran en panne, défectueux ou éteint.

Selon une réalisation, lorsque la source d'images est un disque dur alors l'afficheur tête haute peut afficher des informations stockées sur le disque dur.

Le document FR 3068481 décrit un système d'affichage pour un cockpit d'un aéronef. Ce système d'affichage comprend un calculateur d'affichage configuré pour commander l'affichage, sur un dispositif d'affichage porté solidaire de la tête d'un utilisateur, selon un premier mode d'affichage comprenant au moins une information d'aide au pilotage de l'aéronef. De plus, un dispositif de masquage, associé à une vitre latérale du cockpit, est commandable entre un état transparent et un état opaque. Le système d'affichage comporte un mode d'affichage étendu, dans lequel le calculateur d'affichage est configuré pour déterminer si une direction correspondant à l'orientation de la tête de l'utilisateur présente une intersection avec une zone d'intérêt de la vitre latérale. En l'absence d'intersection, le calculateur d'affichage commande l'affichage selon le premier mode d'affichage. Lors d'une intersection, le calculateur d'affichage commande l'état opaque du dispositif de masquage et l'affichage selon un deuxième mode d'affichage comprenant un écran d'affichage virtuel sur une zone d'affichage de la vitre latérale.

Le document EP 2361832 décrit un cockpit d'un avion ayant un tableau de bord pourvu d'extensions transparentes. La transparence des extensions est modifiable automatiquement ou via les commandes de pilotage selon les opérations de vol et les besoins environnementaux.

Le document US 2018/088323 décrit un système ayant un afficheur porté à opacité réglable.

Le document US 2019/250408 décrit un système ayant de multiples interfaces graphiques. Ce système applique un procédé comprenant les étapes suivantes : recevoir des informations relatives à la position des yeux et de la direction du regard d'un utilisateur, recevoir des informations physiologiques de l'utilisateur, déterminer un niveau de charge cognitive, ajuster l'affichage d'une interface graphique en fonction de la direction du regard et du niveau de charge cognitive de l'utilisateur.

Les documents US 9766465, US 2018/334262 et US 2014/160014 sont aussi connus.

La présente invention a alors pour objet de proposer un procédé permettant d'optimiser le champ de vue d'un pilote tout en redondant les moyens permettant d'afficher les informations primaires nécessaires au pilotage.

L'invention vise ainsi un procédé d'aide au pilotage pour un aéronef, l'aéronef comportant un système d'affichage comprenant au moins un afficheur porté configuré pour être porté solidaire de la tête d'un utilisateur dans un cockpit de l'aéronef, l'aéronef comportant une planche de bord visible par l'utilisateur dans une position tête basse, le système d'affichage comportant au moins un écran multifonction porté par la planche de bord. Le système d'affichage comporte un calculateur d'affichage. Lorsque la tête du pilote est dans une position haute, ce calculateur d'affichage est configuré pour commander, selon un mode d'affichage tête haute, l'affichage sur l'afficheur porté d'au moins une information primaire d'aide au pilotage de l'aéronef, voire uniquement d'au moins une information primaire d'aide au pilotage de l'aéronef. Le système d'affichage comporte un dispositif de positionnement déterminant une information de position relative à un champ de vision dudit utilisateur. Ledit au moins un écran multifonction est configuré pour afficher au moins une information basse, ladite information basse pouvant comprendre une information primaire ou une information secondaire différente d'une information primaire,

Le procédé d'aide au pilotage comprend les étapes suivantes mises en œuvre par le calculateur d'affichage :
- détermination d'un état transparent ou opaque d'une portion à opacité réglable de ladite planche de bord,
- acquisition de ladite information de position provenant du dispositif de positionnement,
- lorsque ledit champ de vision englobe ladite portion à opacité réglable et que ladite portion à opacité réglable est dans un état opaque, commande dudit afficheur porté selon un premier mode d'affichage tête basse,
- lorsque ledit champ de vision englobe ladite portion à opacité réglable et que ladite portion à opacité réglable est dans un état transparent, commande dudit afficheur porté selon un deuxième mode d'affichage tête basse.

Comme indiqué précédemment, les informations primaires sont relatives à des informations de pilotage à court terme, voire à des informations essentielles de pilotage. Les informations de pilotage à court terme peuvent comprendre un angle d'attitude de l'aéronef et/ou un cap suivi et/ou une vitesse air de l'aéronef et/ou une vitesse ascensionnelle et/ou une altitude barométrique de l'aéronef et/ou une hauteur de l'aéronef et/ou un facteur de charge de l'aéronef et/ou des données de navigation et/ou une information de première limitation d'une source motrice de l'aéronef et/ou au moins une alarme...

Les informations secondaires regroupent toutes les autres informations affichables et par exemple : des données météorologiques et/ou des données d'établissement d'une route et/ou des données relatives à des pressions et/ou une température d'huile d'un système de lubrification et/ou des pressions et/ou des températures de gaz d'un moteur et/ou une indication relative à une source d'énergie électrique telle qu'un ampérage ou un voltage et/ou une pression d'un carburant et/ou une pression d'un pneu et/ou le volume de carburant contenu dans chaque réservoir et/ou des données de sortie d'un train d'atterrissage et/ou des images provenant d'une caméra de surveillance et/ou des données relatives à un treuil...

Le terme « uniquement » utilisé dans l'expression « voire uniquement d'au moins une information primaire d'aide au pilotage de l'aéronef » signifie que dans le mode d'affichage tête haute l'afficheur porté n'affiche selon l'alternative concernée aucune information secondaire. Seules des informations de pilotage à court terme ou jugées essentielles au pilotage sont affichées.

A l'inverse, les informations basses peuvent aussi bien comprendre des informations primaires que secondaires à l'instar des informations affichées sur un écran multifonction usuel.

Une planche de bord d'un aéronef monopilote usuel autorisant le vol aux instruments comporte au minimum deux écrans multifonction pour pouvoir garantir que les informations primaires sont visibles en cas de panne d'un écran. Une telle planche de bord est latéralement large et masque la visibilité du paysage extérieur.

L'invention propose une planche de bord comprenant une portion à opacité réglable pouvant être opaque ou transparente sur requête, par exemple sur ordre d'un pilote. Selon une possibilité, une zone traditionnellement occupée par un écran multifonction est ici remplacée par un dispositif transparent qui peut être opacifié sur commande.

En présence d'éventuellement un unique écran multifonction, l'invention permet de répondre à des exigences de sécurité grâce à l'afficheur porté.

En effet, dans la position tête haute, au moins des informations primaires sont affichées sur l'afficheur porté. En cas de panne de l'afficheur porté, les informations primaires peuvent être affichées sur l'écran multifonction.

En position tête basse, la portion à opacité réglable peut être rendue opaque.

L'afficheur porté est alors piloté selon un premier mode d'affichage tête basse permettant notamment d'effectuer un vol aux instruments. Par exemple, les informations usuellement affichables sur un écran multifonction sont affichables sur l'afficheur porté. La lisibilité des informations est en outre optimisée notamment en raison de l'opacité de la portion à opacité réglable. Le basculement dans le premier mode d'affichage tête basse est particulièrement pertinent pour des conditions de vol aux instruments ou en cas de panne de l'écran multifonction.

Si le pilote veut effectuer un vol à vue, la portion à opacité réglable peut être rendue transparente pour permettre au pilote de voir le paysage extérieur au travers de cette portion à opacité réglable dans la position tête basse. La visibilité vers l'extérieur est de fait étendue. L'afficheur porté est alors piloté selon un deuxième mode d'affichage tête basse offrant d'autres possibilités au pilote. Le deuxième mode d'affichage tête basse est distinct du premier mode d'affichage tête basse.

Le procédé peut comporter une ou plusieurs des caractéristiques qui suivent prises seules ou en combinaison.

Par exemple, selon un premier réglage du deuxième mode d'affichage tête basse, le calculateur d'affichage peut être configuré pour commander ladite portion à opacité réglable afin d'afficher au moins une dite information primaire, ledit afficheur porté n'affichant aucune image.

Selon cette possibilité, seule la portion à opacité réglable est activée pour afficher des informations afin de ne pas alourdir le champ de vision de l'utilisateur. La portion à opacité réglable ne peut alors afficher que des informations primaires.

Selon un aspect, selon un deuxième réglage dudit deuxième mode d'affichage tête basse, ladite portion à opacité réglable n'affiche aucune image.

Dans ce cas de figure, il n'y a éventuellement aucune information affichée ni par la portion à opacité réglable ni par l'afficheur porté.

Alternativement, selon ledit deuxième réglage, ledit calculateur d'affichage est configuré pour commander ledit afficheur porté afin d'afficher au moins une information primaire.

Ainsi, que l'utilisateur soit en position tête basse ou tête haute, l'afficheur porté peut afficher les mêmes informations à savoir notamment une ou plusieurs informations primaires.

Les différents réglages peuvent être implémentés sur un même aéronef, un utilisateur choisissant le réglage qu'il souhaite utiliser. Par exemple, le procédé peut alors comporter une étape de manœuvre d'une interface entre deux états correspondant respectivement au premier réglage et au deuxième réglage, ledit procédé comportant une étape de transmission d'un signal de ladite interface vers ledit calculateur d'affichage pour indiquer la sélection du premier réglage ou du deuxième réglage.

Une telle interface peut être une interface homme/machine usuelle ou tactile ou visuelle ou vocale ...

Selon un aspect, dans le premier mode d'affichage tête basse, le calculateur d'affichage peut être configuré pour commander ledit afficheur porté afin d'afficher au moins une dite information basse.

L'afficheur porté agit alors comme un écran multifonction usuel dans la position tête basse et comme un afficheur porté usuel dans la position tête haute.

Par exemple, le procédé peut comporter une étape de sélection avec un sélecteur d'affichage de ladite au moins une information basse à afficher.

Le sélecteur d'affichage peut être une interface homme/machine usuelle tactile ou visuelle ou vocale ...

A l'instar d'un écran multifonction, l'afficheur porté peut afficher diverses pages, le sélecteur d'affichage permettant de choisir la page à afficher. Un page peut contenir des informations primaires et d'autres pages peuvent contenir des informations secondaires.

Eventuellement, le procédé peut comporter les étapes suivantes :
- détermination d'un état de panne dudit écran multifonction,
- en présence d'une dite panne, commande avec le calculateur d'affichage dudit afficheur porté selon le premier mode d'affichage tête basse pour afficher au moins une information basse de type information primaire, voire uniquement une ou plusieurs informations basse de type information primaire.

En cas de panne de l'écran multifonction, l'affichage porté peut être piloté dans la position basse pour forcément afficher les informations primaires, quel que soit le choix réalisé éventuellement avec un sélecteur d'affichage.

Selon un aspect, le procédé peut comporter une étape de choix d'un mode de pilotage à vue ou aux instruments en pilotant ledit état transparent ou opaque de ladite portion à opacité réglable avec un sélecteur d'opacité

Le sélecteur d'opacité peut être une interface homme/machine usuelle tactile ou visuelle ou vocale...

Le sélecteur d'opacité peut transmettre un signal directement à ladite portion à opacité réglable. Alternativement, le sélecteur d'opacité peut transmettre un signal au calculateur d'affichage représentatif de l'état transparent ou opaque choisi, ledit calculateur d'affichage transmettant un signal à ladite portion à opacité réglable pour indiquer à ladite portion à opacité réglable l'état transparent ou opaque à atteindre.

Un utilisateur peut ainsi choisir un mode de vol aux instruments ou à vue en réglant simplement l'opacité de ladite portion à opacité réglable.

Outre un procédé, l'invention vise un aéronef comportant un système d'affichage comprenant au moins un afficheur porté configuré pour être porté solidaire de la tête d'un utilisateur dans un cockpit de l'aéronef, l'aéronef comportant une planche de bord visible par l'utilisateur dans une position tête basse, le système d'affichage comportant au moins un écran multifonction porté par la planche de bord, ledit système d'affichage comportant un calculateur d'affichage, ledit calculateur d'affichage étant configuré pour commander selon un mode d'affichage tête haute l'affichage sur l'afficheur porté d'au moins une information primaire d'aide au pilotage de l'aéronef ,voire uniquement d'au moins une information primaire d'aide au pilotage de l'aéronef, lorsque ladite tête est dans une position haute, ledit système d'affichage comportant un dispositif de positionnement déterminant une information relative à un champ de vision dudit utilisateur, ledit au moins un écran multifonction étant configuré pour afficher au moins une information basse, ladite information basse pouvant comprendre une information primaire ou une information secondaire différente d'une information primaire

Le calculateur d'affichage est configuré pour appliquer le procédé de l'invention.

Selon un aspect, l'aéronef peut comporter une interface manœuvrable entre deux états correspondant respectivement au premier réglage et au deuxième réglage dudit deuxième mode d'affichage tête basse

Selon un aspect, l'aéronef peut comporter un sélecteur d'affichage pour sélectionner au moins une dite information basse à afficher sur l'afficheur porté dans le premier mode d'affichage tête basse.

Selon un aspect, l'aéronef peut comporter un détecteur de panne dudit au moins un écran multifonction.

Selon un aspect, l'aéronef peut comporter un sélecteur d'opacité pour choisir ledit état transparent ou ledit état opaque en vol.

Selon un aspect, ladite portion à opacité réglable peut être agencée devant ledit utilisateur selon le sens de déplacement vers l'avant dudit aéronef.

Eventuellement, ledit au moins un écran multifonction peut être disposé sur un panneau central de la planche de bord, ladite portion à opacité réglable étant agencée latéralement par rapport au panneau central.

Le terme « latéralement » est à considérer au regard d'une direction sensiblement parallèle à l'axe de tangage de l'aéronef, une direction latérale étant ainsi sensiblement parallèle à l'axe de tangage.

La portion à opacité réglable peut être agencée dans le prolongement du panneau central du côté pilote ou du côté copilote par exemple.

L'invention et ses avantages apparaîtront avec plus de détails dans le cadre de la description qui suit avec des exemples donnés à titre illustratif en référence aux figures annexées qui représentent :
[Fig 1] la figure 1, une vue illustrant un aéronef selon l'invention, et
[Fig 2] la figure 2, un schéma illustrant le procédé selon l'invention.

Les éléments présents dans plusieurs figures distinctes sont affectés d'une seule et même référence.

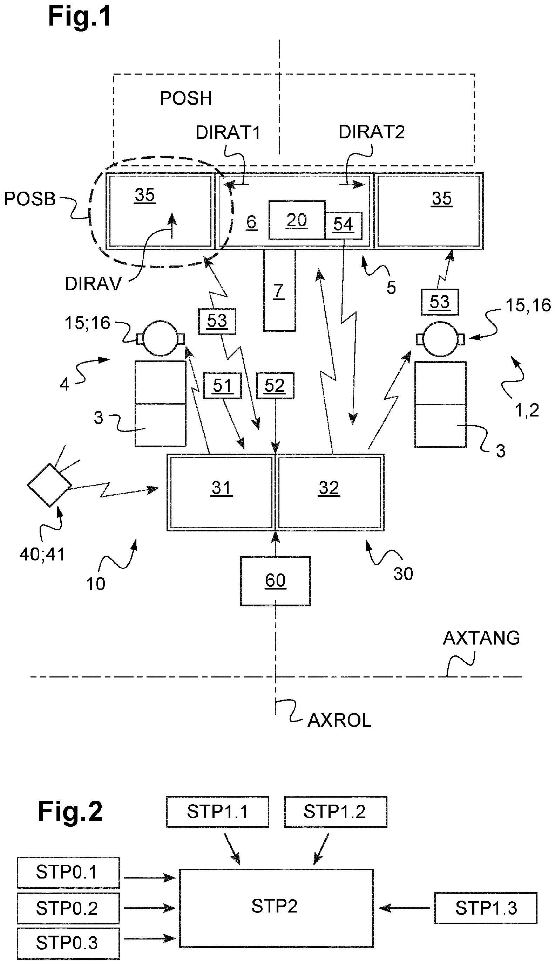

La figure 1 présente un véhicule 1 du type de l'invention. Ce véhicule 1 peut notamment être un aéronef tel qu'un avion ou un giravion.

Ce véhicule 1 comporte un cockpit 2 dans lequel se trouve au moins un siège 3 pour un membre d'équipage. Selon l'exemple illustré, le cockpit 2 comporte un siège pilote et un siège copilote.

De plus, le véhicule 1 comporte une planche de bord 5 voire un pupitre 7. La planche de bord 5 comporte un sous-ensemble dénommé panneau central 6 par commodité. Par exemple, le panneau central 6 se trouve dans la continuité du pupitre 7 selon une direction sensiblement parallèle à l'axe de roulis AXROL du véhicule. Par exemple, le panneau central 6 s'étend transversalement dans un plan d'un premier coté du cockpit 2 contenant le siège pilote jusqu'à un deuxième coté contenant le siège copilote selon une direction sensiblement parallèle à l'axe de tangage AXTANG du véhicule 1. Le pupitre 7 peut s'étendre entre le siège pilote et le siège copilote.

Par ailleurs, la planche de bord 5 comporte au moins une portion 35 à opacité réglable.

Par exemple, chaque portion à opacité réglable 35 est agencée devant un utilisateur selon le sens de déplacement DIRAV vers l'avant du véhicule 1, à savoir par exemple devant un pilote ou un copilote.

Par exemple, chaque portion à opacité réglable 35 est agencée latéralement DIRLAT1, DIRLAT2 par rapport au panneau central 6. Chaque portion à opacité réglable 35 peut être agencée sur un côté du panneau central 6 selon un sens DIRLAT1, DIRLAT2 sensiblement parallèle à l'axe de tangage AXTANG. Par exemple, deux portions 35 à opacité réglable sont disposées latéralement de part et d'autre du panneau central 6, une portion à opacité réglable 35 étant située en face du pilote et une portion à opacité réglable 35 étant située en face du copilote le cas échéant. Sur un véhicule monopilote, une seule portion à opacité réglable 35 peut être agencée en face du pilote.

Chaque portion à opacité réglable 35 est commandée au moyen d'un sélecteur d'opacité 53 pour présenter un premier état dit transparent ou un deuxième état dit opaque au choix d'un utilisateur. Par exemple, chaque portion à opacité réglable 35 est reliée directement ou indirectement à un sélecteur d'opacité 53. Un sélecteur d'opacité 53 peut prendre la forme d'une interface homme-machine, telle que par exemple un bouton, un écran tactile, un clavier, une unité de pointage de type trackball ou souris...

Lorsque la portion à opacité réglable 35 est dans l'état transparent alors un utilisateur situé dans le cockpit 3 peut voir l'environnement extérieur au véhicule 1 à travers cette portion à opacité réglable 35. Lorsque la portion à opacité réglable 35 est dans l'état opaque, la portion à opacité réglable 35 masque la vision de l'environnement extérieur.

Chaque portion à opacité réglable 35 peut être d'un type connu. En particulier, l'enseignement du document EP 2361832 est applicable. Dans un mode de réalisation particulier, la portion à opacité réglable 35 comporte un film électrochromatique ou électro-optique appliqué sur une vitre. Ce film est ainsi commandable entre l'état transparent et l'état opaque par application d'une tension électrique particulière. Par exemple, l'absence d'application d'une tension électrique engendre l'état transparent alors que la transmission d'une tension électrique non nulle engendre l'état opaque.

A cet effet, un courant électrique peut être transmis au film directement par le sélecteur d'opacité 53 ou via un contrôleur local configuré pour engendrer la tension électrique appropriée sur ordre du sélecteur d'opacité 53.

La planche de bord 5 et notamment chaque portion à opacité réglable 35 sont visibles par un pilote ou un copilote dans une position tête basse POSB. A l'inverse, un pilote ou un copilote peut visualiser un environnement extérieur au véhicule en regardant au dessus de la planche de bord 5 dans une position tête haute POSH.

Le véhicule 1 comporte un système d'affichage 10 permettant d'afficher des informations primaires et secondaires, ces notions étant connues de l'homme du métier.

Le système d'affichage 10 comporte au moins un écran multifonction 20 porté par la planche de bord 5. Par exemple, au moins un voire un unique écran multifonction 20 est agencé sur le panneau central 6. Un tel écran multifonction 6 peut être d'un type usuel. Un tel écran multifonction 6 peut être configuré pour afficher au moins une information basse, cette information basse pouvant comprendre au moins une information primaire ou au moins une information secondaire différente d'une information primaire. Par exemple, un écran multifonction peut afficher au moins une page contenant des informations primaires voire uniquement des informations primaires et au moins une page contenant des informations secondaires voire uniquement des informations secondaires. Un membre d'équipage ou un calculateur peut choisir l'information basse à afficher à chaque instant.

Chaque écran multifonction 20 peut être commandé par un calculateur dénommé par commodité « calculateur d'affichage 30 ». Un calculateur d'affichage 30 est ainsi relié par une connexion filaire ou non filaire à chaque écran multifonction 20.

Le calculateur d'affichage 30 peut comprendre un unique calculateur contrôlant plusieurs dispositifs, voire plusieurs dispositifs d'affichage ou plusieurs calculateurs, communiquant entre eux. Par exemple, le calculateur d'affichage 30 peut comprendre un calculateur générateur de symbole tête haute 31 et un calculateur générateur de symboles tête basse 32, le calculateur générateur de symboles tête basse 32 étant dédié aux écrans multifonctions 20. Selon un autre exemple, un unique calculateur comportant au moins un segment de code dédié aux écrans multifonction 20 voire d'autres segments de code dédiés à d'autres afficheurs.

Chaque calculateur peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Dans un mode particulier de réalisation, ce calculateur d'affichage correspond à un calculateur, connu sous l'acronyme IMA et l'expression anglaise « Integrated Modular Avionics », pouvant remplir d'autres fonctions que l'affichage.

Pour générer les informations requises, le calculateur d'affichage 30 peut être relié à des senseurs 60. Par exemple, le calculateur d'affichage 30 est relié à un ou plusieurs senseurs 60 directement ou via au moins un calculateur avionique 12 par une liaison d'un réseau de communication.

Le terme « senseur » peut désigner un équipement comprenant un ou plusieurs capteurs ou équivalents voire un ou plusieurs calculateurs.

Chaque senseur 60 génère un signal numérique, analogique ou optique par exemple relatif à une information. A titre d'exemple illustratif non exhaustif, le véhicule 1 peut comprendre des senseurs 60 comprenant au moins une centrale inertielle, au moins une radiosonde, au moins un variomètre, au moins un système anémobarométrique, au moins un système de localisation par satellites, au moins un système radar ou lidar, au moins un capteur de pression de gaz ou d'huile, au moins une jauge de volume de carburant ou d'huile, au moins un capteur de températures, au moins un capteur de limaille.... Les divers senseurs 60 permettant de générer les informations primaires et secondaires sont connus de l'homme du métier, la liste précédente étant juste donnée pour illustrer l'invention.

Par ailleurs, le système d'affichage 10 comporte au moins un afficheur porté 15 solidaire de la tête d'un utilisateur, à savoir le pilote ou le copilote selon l'exemple illustré. Par exemple, l'afficheur porté 15 est agencé sur un casque 16. L'afficheur porté 15 peut être d'un type usuel, et par exemple peut être un système dénommé « head mounted display » en langue anglaise, un système dénommé « head worn display », un système dénommé « near eye display » en langue anglaise, un système dénommé « Helmet Mounted Display » lorsque monté sur un casque ou encore par exemple « Helmet Mounted Sight & Display ».

Chaque afficheur porté 15 peut être commandé par le calculateur d'affichage 30. Le calculateur d'affichage 30 est ainsi relié par une connexion filaire ou non filaire à chaque afficheur porté 15.

Par exemple, le calculateur d'affichage 30 peut comprendre un calculateur générateur de symboles tête haute 31 dédié aux afficheurs portés 15. Selon un autre exemple, un unique calculateur comporte au moins un segment de code dédié aux afficheurs portés 15.

Par ailleurs, le système d'affichage 10 comporte un dispositif de positionnement 40 déterminant une information de position relative à un champ de vision dudit utilisateur.

Le dispositif de positionnement 40 est relié au calculateur d'affichage 30 par une liaison filaire ou non filaire afin de lui transmettre un signal analogique, numérique ou optique permettant du calculateur d'affichage 30 de déterminer où regarde l'utilisateur selon une technique connue.

Par exemple, le dispositif de positionnement 40 comporte un capteur monté solidaire de l'afficheur porté 15, tel qu'un capteur inertiel.

De manière complémentaire ou alternative, le dispositif de positionnement 40 comporte un capteur monté solidaire du cockpit 2. Selon l'exemple illustré, le dispositif de positionnement 40 comporte ainsi au moins une caméra 41 disposée de façon à filmer automatiquement la tête de l'utilisateur.

Le dispositif de positionnement 40 peut comporter un calculateur de positionnement exploitant les signaux reçus pour déterminer la direction du champ de vision de l'utilisateur selon des techniques connues. Alternativement, le calculateur d'affichage 30 exploite les signaux reçus pour déterminer la direction du champ de vision de l'utilisateur selon des techniques connues.

Le dispositif de positionnement 40 permet ainsi de déterminer si le champ de vision de l'utilisateur, et par exemple sa zone de vision fovéale, portant l'afficheur porté est dirigé vers la portion à opacité réglable 35. Par exemple, le calculateur de positionnement ou le calculateur d'affichage 30 détermine si le champ de vision de l'utilisateur portant l'afficheur porté englobe ou n'englobe pas la portion à opacité réglable 35.

Selon un autre aspect, le véhicule 1 peut comporter un sélecteur d'affichage 52 pour sélectionner chaque information basse à afficher sur l'afficheur porté 15 lorsqu'un premier mode d'affichage tête basse explicité par la suite est mis en œuvre.

Le sélecteur d'affichage 52 peut prendre la forme d'une interface homme-machine, telle que par exemple un bouton, un écran tactile, un clavier, une unité de pointage de type trackball ou souris...

Le sélecteur d'affichage 52 peut être relié par une liaison filaire ou non filaire au calculateur d'affichage 30 et/ou à l'afficheur porté 15.

Selon un autre aspect, le véhicule 1 peut comporter une interface 51 manœuvrable entre deux états correspondant respectivement à un premier réglage et à un deuxième réglage d'un deuxième mode d'affichage tête basse explicité par la suite.

L'interface 51 peut prendre la forme d'une interface homme-machine, telle que par exemple un bouton, un écran tactile, un clavier, une unité de pointage de type trackball ou souris...

L'interface 51 peut être reliée par une liaison filaire ou non filaire au calculateur d'affichage 30 et/ou à l'afficheur porté 15.

Selon un autre aspect, le véhicule 1 peut comporter un détecteur de panne 54 pour détecter une panne de chaque écran multifonction 20. Un tel détecteur de panne 54 peut prendre la forme d'un réseau de détection de panne usuel d'un véhicule 1 et en particulier d'un aéronef. Un tel détecteur de panne 54 peut comprendre par exemple un calculateur appliquant des algorithmes connus. A titre illustratif, un contrôle de redondance cyclique, une mesure de courant électrique, un test cyclique dénommé « built in test » et/ou un système connu sous l'expression anglaise « watchdog » peuvent être utilisés pour détecter une panne.

Dès lors, le calculateur d'affichage 30 est configuré pour appliquer le procédé illustré schématiquement sur la figure 2 afin de contrôler les différents dispositifs d'affichage en transmettant au moins un signal de commande numérique, analogique ou optique par exemple. Ce procédé comporte une ou plusieurs des étapes suivantes réalisées de manière itérative.

Durant une étape d'estimation de la configuration courante STP1.1, le calculateur d'affichage détermine si la portion 35 à opacité réglable est dans l'état transparent ou dans l'état opaque.

En effet, durant une étape préparatoire STP0.1 un membre d'équipage peut régler l'état courant de la portion à opacité réglable 35 à l'aide d'un sélecteur d'opacité 53 par exemple pour choisir un mode de pilotage. En parallèle, ce sélecteur d'opacité 53 peut transmettre un signal d'état numérique, analogique ou optique au calculateur d'affichage 30 pour lui signifier si la portion à opacité réglable 35 est dans l'état transparent ou dans l'état opaque. L'acquisition voire l'analyse de ce signal permet au calculateur d'affichage 30 de déterminer l'état courant de la portion à opacité réglable 35.

Durant une étape d'ajustement STP1.2, le calculateur d'affichage 30 reçoit un signal de position numérique, analogique ou optique du dispositif de positionnement 40. Le calculateur d'affichage 30 acquiert ainsi une information porteuse directement ou indirectement de la position du champ de vision de l'utilisateur.

A partir du signal de position, le calculateur d'affichage 30 acquiert, voire détermine, si l'utilisateur portant l'afficheur porté regarde la portion à opacité réglable 35 ou ne regarde pas la portion à opacité réglable 35. Par exemple, le calculateur d'affichage 30 ou un éventuel calculateur de positionnement détermine à l'aide des données transmises par le ou les capteurs du dispositif de positionnement 40 si la direction correspondant à l'orientation de la tête de l'utilisateur présente une intersection avec une zone incluant la portion à opacité réglable 35 selon une technique connue. Par exemple, l'enseignement du document FR 3068481 ou du document FR 3077900 est utilisable.

Durant une étape de commande d'afficheur STP2, si la tête de l'utilisateur est dans une position haute POSH, le calculateur d'affichage 30 met en œuvre un mode d'affichage tête haute pour transmettre un signal de commande d'affichage numérique, analogique ou optique à l'afficheur porté 15. Suite à la réception du signal de commande d'affichage provenant du calculateur d'affichage 30, l'afficheur porté 15 affiche alors au moins une ou plusieurs informations primaires. Selon une alternative, l'afficheur porté 15 affiche uniquement une ou plusieurs informations primaires afin que cet afficheur porté 15 ne puisse pas afficher des informations secondaires dans ce mode. Le signal de commande d'affichage peut notamment contenir les informations primaires à afficher, voire les autres informations le cas échéant.

Chaque information primaire ou autre peut être issue d'un calculateur avionique et/ou d'un senseur 60.

Selon un exemple, l'afficheur porté 15 affiche alors un symbole représentant le véhicule 1, un symbole représentant un vecteur vitesse du véhicule 1, une échelle d'assiette du véhicule 1. De plus, sont aussi affichées une échelle d'altitude ou de hauteur, une échelle de vitesse et une échelle de roulis du véhicule 1.

Durant l'étape de commande d'afficheur STP2, lorsque le champ de vision de l'utilisateur englobe la portion à opacité réglable 35 et que cette portion à opacité réglable 35 est dans un état opaque, le calculateur d'affichage 30 commande l'afficheur porté 15 selon un premier mode d'affichage tête basse. Le premier mode d'affichage tête basse correspond à un mode de fonctionnement aux instruments puisque la portion à opacité réglable 35 rendue opaque ne permet pas à l'utilisateur de voir au travers d'elle.

Durant ce premier mode d'affichage tête basse, le calculateur d'affichage 30 peut être configuré pour commander l'afficheur porté 15 afin d'afficher au moins une dite information basse à l'instar d'un écran multifonction.

Au choix de l'utilisateur et par exemple d'un pilote ou du calculateur d'affichage par exemple, l'afficheur porté 15 peut afficher soit les informations primaires soit des informations secondaires, le mode d'affichage tête haute pouvant éventuellement autoriser l'affichage uniquement des informations primaires.

Eventuellement, le procédé peut comporter une étape de sélection STP0.2 durant laquelle un individu choisi les informations basses à afficher avec un sélecteur d'affichage 52. Le sélecteur d'affichage 52 transmet un signal analogique, numérique ou optique porteur du choix effectué au calculateur d'affichage.

Par exemple, un pilote peut manœuvrer le sélecteur d'affichage 52 pour afficher dans un premier temps une image contenant les informations primaires. Le pilote peut ensuite à nouveau manœuvrer le sélecteur d'affichage 52 pour afficher une image contenant des informations secondaires, telle qu'à titre illustratif une page montrant la répartition du carburant embarqué au sein des divers réservoirs du véhicule.

Selon une variante et indépendamment des informations basses normalement à afficher en raison de la manoeuvre du sélecteur d'affichage 52, le procédé peut prévoir une étape STP1.3 de détermination d'un état de panne de l'écran multifonction 20. Si un détecteur de panne 54 transmet au calculateur d'affichage 30 un signal numérique, analogique ou optique synonyme d'une telle panne, le calculateur d'affichage 30 peut transmettre un signal numérique, analogique ou optique à l'afficheur porté 15 pour afficher au moins les informations primaires. Cette caractéristique permet de garantir l'affichage des informations primaires en position tête basse même en cas de panne de l'écran multifonction 20.

A l'inverse et si l'écran multifonction est en état de marche et si un détecteur de panne a détecté une panne de l'afficheur porté alors l'écran multifonction 20 peut être commandé par le calculateur d'affichage pour afficher les informations primaires, indépendamment du choix fait par l'utilisateur.

Durant l'étape de commande d'afficheur STP2, lorsque le champ de vision de l'utilisateur englobe la portion à opacité réglable 35 et que cette portion à opacité réglable 35 est dans un état transparent, le calculateur d'affichage 30 commande l'afficheur porté 15 selon un deuxième mode d'affichage tête basse. Le deuxième mode d'affichage tête basse correspond à un mode de fonctionnement à vue puisque la portion à opacité réglable 35 rendue transparente permet à l'utilisateur de voir au travers d'elle.

Le choix du mode de fonctionnement aux instruments ou à vue n'est ainsi pas fait par un calculateur mais finalement par un membre d'équipage en choisissant l'état de la portion 35 à opacité réglable à l'aide du sélecteur d'opacité 53. Le sélecteur d'opacité 53 permet d'activer ou de désactiver un mode de vision étendue au travers de la portion à opacité réglable 35 au choix d'un membre d'équipage.

Durant ce deuxième mode d'affichage tête basse, le calculateur d'affichage 30 peut être configuré de diverses manières Selon un premier réglage, le calculateur d'affichage 30 transmet un signal à la portion à opacité réglable pour afficher les informations primaires sur la portion à opacité réglable 35, éventuellement collimatées à l'infini. La portion à opacité réglable 35 peut en effet être une portion à opacité réglable 35 à opacité réglable de plus susceptible d'afficher des images ou des données. Dans ce cas, l'afficheur porté 15 n'affiche aucune image.

Selon un deuxième réglage, la portion à opacité réglable 35 n'affiche aucune image. L'afficheur porté 15 peut alors être piloté par le calculateur d'affichage 30 soit pour ne rien afficher soit par exemple pour afficher au moins les informations primaires. Eventuellement, durant une étape de réglage STP0.3, un membre d'équipage peut manœuvrer l'interface 51 entre deux états correspondant respectivement au premier réglage et au deuxième réglage.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent.

## Revendications

1. Procédé d'aide au pilotage pour un aéronef (1), l'aéronef (1) comportant un système d'affichage (10) comprenant au moins un afficheur porté (15) configuré pour être porté solidaire de la tête d'un utilisateur dans un cockpit (2) de l'aéronef (1), l'aéronef (1) comportant une planche de bord (5) visible par l'utilisateur dans une position tête basse, le système d'affichage (10) comportant au moins un écran multifonction (20) porté par la planche de bord (5), ledit système d'affichage (10) comportant un calculateur d'affichage (30), ledit calculateur d'affichage (30) étant configuré pour commander selon un mode d'affichage tête haute l'affichage sur l'afficheur porté (15) d'au moins une information primaire d'aide au pilotage de l'aéronef (1) lorsque ladite tête est dans une position haute, ledit système d'affichage (10) comportant un dispositif de positionnement (40) déterminant une information de position relative à un champ de vision dudit utilisateur, ledit au moins un écran multifonction (20) étant configuré pour afficher au moins une information basse, ladite information basse pouvant comprendre une information primaire ou une information secondaire différente d'une information primaire,
**caractérisé en ce que**, le procédé comprend les étapes suivantes mises en œuvre par le calculateur d'affichage (30) :
- détermination d'un état transparent ou opaque d'une portion (35) à opacité réglable de ladite planche de bord (5),
- acquisition de ladite information de position provenant du dispositif de positionnement (40),
- lorsque ledit champ de vision englobe ladite portion à opacité réglable (35) et que ladite portion à opacité réglable (35) est dans un état opaque, commande dudit afficheur porté (15) selon un premier mode d'affichage tête basse,
- lorsque ledit champ de vision englobe ladite portion à opacité réglable (35) et que ladite portion à opacité réglable (35) est dans un état transparent, commande dudit afficheur porté (15) selon un deuxième mode d'affichage tête basse.

2. Procédé selon la revendication 1,
**caractérisé en ce que**, selon un premier réglage dudit deuxième mode d'affichage tête basse, ledit calculateur d'affichage (30) est configuré pour commander ladite portion à opacité réglable (35) afin d'afficher au moins une dite information primaire, ledit afficheur porté (15) n'affichant aucune image.

3. Procédé selon l'une quelconque des revendications 1 à 2,
**caractérisé en ce que** selon un deuxième réglage dudit deuxième mode d'affichage tête basse, ladite portion à opacité réglable (35) n'affiche aucune image.

4. Procédé selon la revendication 3,
**caractérisé en ce que** selon ledit deuxième réglage ledit calculateur d'affichage (30) est configuré pour commander ledit afficheur porté (15) afin d'afficher au moins une information primaire.

5. Procédé selon la revendication 2 et la revendication 3,
**caractérisé en ce que** ledit procédé comporte une étape de manœuvre d'une interface (51) entre deux états correspondant respectivement au premier réglage et au deuxième réglage, ledit procédé comportant une étape de transmission d'un signal de ladite interface (51) vers ledit calculateur d'affichage (30) pour indiquer la sélection du premier réglage ou du deuxième réglage.

6. Procédé selon l'une quelconque des revendications 1 à 5,
**caractérisé en ce que** dans le premier mode d'affichage tête basse ledit calculateur d'affichage (30) est configuré pour commander ledit afficheur porté (15) afin d'afficher au moins une dite information basse.

7. Procédé selon la revendication 6,
**caractérisé en ce que** ledit procédé comporte une étape de sélection avec un sélecteur d'affichage (52) de ladite au moins une information basse à afficher.

8. Procédé selon l'une quelconque des revendications 6 à 7,
**caractérisé en ce que** ledit procédé comporte les étapes suivantes :
- détermination d'un état de panne dudit écran multifonction (20),
- en présence d'une dite panne, commande avec le calculateur d'affichage (30) dudit afficheur porté (15) selon le premier mode d'affichage tête basse pour afficher au moins une information basse de type information primaire.

9. Procédé selon l'une quelconque des revendications 1 à 8, **caractérisé en ce que** ledit procédé comporte une étape de choix d'un mode de pilotage à vue ou aux instruments en pilotant ledit état transparent ou opaque de ladite portion à opacité réglable (35) avec un sélecteur d'opacité (53).

10. Aéronef (1) comportant un système d'affichage (10) comprenant au moins un afficheur porté (15) configuré pour être porté solidaire de la tête d'un utilisateur dans un cockpit (2) de l'aéronef (1), l'aéronef (1) comportant une planche de bord (5) visible par l'utilisateur dans une position tête basse, le système d'affichage (10) comportant au moins un écran multifonction (20) porté par la planche de bord (5), ledit système d'affichage (10) comportant un calculateur d'affichage (30), ledit calculateur d'affichage (30) étant configuré pour commander selon un mode d'affichage tête haute l'affichage sur l'afficheur porté (15) d'au moins une information primaire d'aide au pilotage de l'aéronef (1) lorsque ladite tête est dans une position haute, ledit système d'affichage (10) comportant un dispositif de positionnement (40) déterminant une information relative à un champ de vision dudit utilisateur, ledit au moins un écran multifonction (20) étant configuré pour afficher au moins une information basse, ladite information basse pouvant comprendre une information primaire ou une information secondaire différente d'une information primaire **caractérisé en ce que** ladite planche de bord comportant une portion (35) à opacité réglable, ledit calculateur d'affichage (30) est configuré pour appliquer le procédé selon l'une quelconque des revendications 1 à 9.

11. Aéronef selon la revendication 10,
**caractérisé en ce que** ledit aéronef (1) comporte une interface (51) manœuvrable entre deux états correspondant respectivement à un premier réglage et un deuxième réglage dudit deuxième mode d'affichage tête basse

12. Aéronef selon l'une quelconque des revendications 10 à 11,
**caractérisé en ce que** ledit aéronef (1) comporte un sélecteur d'affichage (52) pour sélectionner au moins une dite information basse à afficher sur l'afficheur porté (15) dans le premier mode d'affichage tête basse.

13. Aéronef selon l'une quelconque des revendications 10 à 12,
**caractérisé en ce que** ledit aéronef (1) comporte un détecteur (54) de panne dudit au moins un écran multifonction.

14. Aéronef selon l'une quelconque des revendications 10 à 13,
**caractérisé en ce que** ledit aéronef comporte un sélecteur d'opacité (53) pour choisir ledit état transparent ou ledit état opaque en vol.

15. Aéronef selon l'une quelconque des revendications 10 à 14,
**caractérisé en ce que** ladite portion à opacité réglable (35) est agencée devant ledit utilisateur selon le sens de déplacement (DIRAV) vers l'avant dudit aéronef (1).

16. Aéronef selon l'une quelconque des revendications 10 à 15,
**caractérisé en ce que** ledit au moins un écran multifonction (20) est disposé sur un panneau central (6) de la planche de bord (5), ladite portion à opacité réglable (35) étant agencée latéralement (DIRLAT1, DIRLAT2) par rapport au panneau central (6).

## Patentansprüche

1. Hilfsverfahren für die Steuerung eines Luftfahrzeugs (1), wobei das Luftfahrzeug (1) ein Anzeigesystem (10) umfasst, das mindestens ein getragenes Display (15) umfasst, das konfiguriert ist, um fest am Kopf eines Benutzers in einem Cockpit (2) des Luftfahrzeugs (1) getragen zu werden, wobei das Luftfahrzeug (1) ein Armaturenbrett (5) umfasst, das für den Benutzer in einer Position mit gesenktem Kopf sichtbar ist, und wobei das Anzeigesystem (10) mindestens einen Multifunktionsbildschirm (20) umfasst, der durch das Armaturenbrett (5) getragen wird,
wobei das Anzeigesystem (10) einen Anzeigerechner (30) umfasst, und der Anzeigerechner (30) konfiguriert ist, um in einem Anzeigemodus mit gehobenem Kopf die Anzeige von mindestens einer primären Information zur Unterstützung der Steuerung des Luftfahrzeugs (1) auf dem getragenen Display (15) zu steuern, wenn sich der Kopf in einer erhobenen Position befindet, wobei das Anzeigesystem (10) eine Positionierungsvorrichtung (40) umfasst, die eine Positionsinformation in Bezug auf ein Sichtfeld des Benutzers bestimmt, wobei der mindestens eine Multifunktionsbildschirm (20) konfiguriert ist, um mindestens eine untere Information anzuzeigen, wobei die untere Information eine Primärinformation oder eine Sekundärinformation umfassen kann, die sich von einer Primärinformation unterscheidet,
**dadurch gekennzeichnet, dass** das Verfahren die folgenden von dem Anzeigerechner (30) ausgeführten Schritte umfasst:
- Bestimmen eines transparenten oder opaken Zustands eines Abschnitts (35) mit einstellbarer Opazität des Armaturenbretts (5),
- Erfassen der Positionsinformation von der Positionierungsvorrichtung (40),
- wenn das Sichtfeld den Abschnitt mit einstellbarer Opazität (35) umfasst und der Abschnitt mit einstellbarer Opazität (35) sich in einem opaken Zustand befindet, Steuern des getragenen Displays (15) gemäß einem ersten Anzeigemodus mit erhobenem Kopf,
- wenn das Sichtfeld den Abschnitt mit einstellbarer Opazität (35) umfasst und der Abschnitt mit einstellbarer Opazität (35) sich in einem transparenten Zustand befindet, Steuern des getragenen Displays (15) gemäß einem zweiten Anzeigemodus mit gesenktem Kopf.

2. Verfahren nach Anspruch 1,
**dadurch gekennzeichnet, dass** gemäß einer ersten Einstellung des zweiten Anzeigemodus mit gesenktem Kopf der Anzeigerechner (30) konfiguriert ist, um den Abschnitt mit einstellbarer Opazität (35) zu steuern, um mindestens eine besagte Primärinformation anzuzeigen, wobei das getragene Display (15) kein Bild anzeigt.

3. Verfahren nach einem der Ansprüche 1 bis 2,
**dadurch gekennzeichnet, dass** gemäß einer zweiten Einstellung des zweiten Anzeigemodus mit gesenktem Kopf der Abschnitt mit einstellbarer Opazität (35) kein Bild anzeigt.

4. Verfahren nach Anspruch 3,
**dadurch gekennzeichnet, dass** gemäß der zweiten Einstellung der Anzeigerechner (30) konfiguriert ist, um das getragene Display (15) zum Anzeigen von mindestens einer Primärinformation zu steuern.

5. Verfahren nach Anspruch 2 und Anspruch 3,
**dadurch gekennzeichnet, dass** das Verfahren einen Schritt des Umschaltens einer Schnittstelle (51) zwischen zwei Zuständen umfasst, die jeweils der ersten Einstellung und der zweiten Einstellung entsprechen, wobei das Verfahren einen Schritt des Übertragens eines Signals von der Schnittstelle (51) zu dem Anzeigerechner (30) umfasst, um die Auswahl der ersten Einstellung oder der zweiten Einstellung anzuzeigen.

6. Verfahren nach einem der Ansprüche 1 bis 5,
**dadurch gekennzeichnet, dass** im ersten Anzeigemodus mit gesenktem Kopf der Anzeigesteuerrechner (30) konfiguriert ist, um das getragene Display (15) zum Anzeigen von mindestens einer der besagten unteren Informationen zu steuern.

7. Verfahren nach Anspruch 6,
**dadurch gekennzeichnet, dass** das Verfahren einen Schritt des Auswählens der mindestens einen anzuzeigenden unteren Information mit einem Anzeigewähler (52) umfasst.

8. Verfahren nach einem der Ansprüche 6 bis 7,
**dadurch gekennzeichnet, dass** das Verfahren die folgenden Schritte umfasst:
- Bestimmen eines Störungszustands des Multifunktionsbildschirms (20),
- bei Vorliegen einer solchen Störung, Steuern des getragenen Displays (15) mit dem Anzeigerechner (30) gemäß dem ersten Anzeigemodus mit gesenktem Kopf, um mindestens eine untere Information vom Typ Primärinformation anzuzeigen.

9. Verfahren nach einem der Ansprüche 1 bis 8,
**dadurch gekennzeichnet, dass** das Verfahren einen Schritt des Auswählens eines Sicht- oder Instrumentensteuerungsmodus durch Steuern des transparenten oder opaken Zustands des Abschnitts mit einstellbarer Opazität (35) mittels eines Opazitätswählers (53) umfasst.

10. Luftfahrzeug (1) mit einem Anzeigesystem (10), das mindestens ein getragenes Display (15) umfasst, das konfiguriert ist, um fest am Kopf eines Benutzers in einem Cockpit (2) des Luftfahrzeugs (1) getragen zu werden, wobei das Luftfahrzeug (1) ein Armaturenbrett (5) umfasst, das für den Benutzer in einer Position mit gesenktem Kopf sichtbar ist, wobei das Anzeigesystem (10) mindestens einen von dem Armaturenbrett (5) getragenen Multifunktionsbildschirm (20) umfasst, wobei das Anzeigesystem (10) einen Anzeigerechner (30) umfasst, wobei der Anzeigerechner (30) konfiguriert ist, um in einem Anzeigemodus mit erhobenem Kopf die Anzeige von mindestens einer primären Information zur Unterstützung der Steuerung des Luftfahrzeugs (1) auf dem getragenen Display (15) zu steuern, wenn sich der Kopf in einer erhobenen Position befindet, das Anzeigesystem (10) eine Positionierungsvorrichtung (40) umfasst, die eine Information bezüglich eines Sichtfelds des Benutzers bestimmt, wobei der mindestens eine Multifunktionsbildschirm (20) konfiguriert ist, um mindestens eine untere Information anzuzeigen, wobei die untere Information eine Primärinformation oder eine Sekundärinformation umfassen kann, die sich von einer Primärinformation unterscheidet,
**dadurch gekennzeichnet, dass** das Armaturenbrett einen Abschnitt (35) mit einstellbarer Opazität umfasst, wobei der Anzeigerechner (30) konfiguriert ist, das Verfahren nach einem der Ansprüche 1 bis 9 anzuwenden.

11. Luftfahrzeug nach Anspruch 10,
**dadurch gekennzeichnet, dass** das Luftfahrzeug (1) eine Schnittstelle (51) aufweist, die zwischen zwei Zuständen umschaltbar ist, die jeweils einer ersten Einstellung und einer zweiten Einstellung des zweiten Anzeigemodus mit gesenktem Kopf entsprechen.

12. Luftfahrzeug nach einem der Ansprüche 10 bis 11,
**dadurch gekennzeichnet, dass** das Luftfahrzeug (1) einen Anzeigeselektor (52) zum Auswählen mindestens einer besagten unteren Information aufweist, die auf dem getragenen Display (15) im ersten Anzeigemodus mit gesenktem Kopf angezeigt werden soll.

13. Luftfahrzeug nach einem der Ansprüche 10 bis 12,
**dadurch gekennzeichnet, dass** das Luftfahrzeug (1) einen Detektor (54) für eine Störung des mindestens einen Multifunktionsbildschirms aufweist.

14. Luftfahrzeug nach einem der Ansprüche 10 bis 13,
**dadurch gekennzeichnet, dass** das Luftfahrzeug einen Opazitätswähler (53) aufweist, um während des Fluges den transparenten Zustand oder den opaken Zustand zu wählen.

15. Luftfahrzeug nach einem der Ansprüche 10 bis 14,
**dadurch gekennzeichnet, dass** der Abschnitt mit einstellbarer Opazität (35) in Vorwärtsbewegungsrichtung (DIRAV) des Luftfahrzeugs (1) vor dem Benutzer angeordnet ist.

16. Luftfahrzeug nach einem der Ansprüche 10 bis 15,
**dadurch gekennzeichnet, dass** der mindestens eine Multifunktionsbildschirm (20) auf einem Mittelfeld (6) des Armaturenbretts (5) angeordnet ist,
wobei der Abschnitt mit einstellbarer Opazität (35) seitlich (DIRLAT1, DIRLAT2) in Bezug auf das Mittelfeld (6) angeordnet ist.

## Claims

1. Method to assist piloting of an aircraft (1), the aircraft (1) including a display system (10) comprising at least one worn display (15) configured to be worn integral with the head of a user in a cockpit (2) of the aircraft (1), the aircraft (1) including an instrument panel (5) visible to the user in a head-down position, the display system (10) including at least one multifunction screen (20) supported by the instrument panel (5), said display system (10) including a display computer (30), said display computer (30) being configured to control according to a head-up display mode the display on the worn display (15) of at least one item of primary information to assist piloting of the aircraft (1) when said head is in an up position, said display system (10) including a positioning device (40) determining an item of position information relative to a field of view of said user, said at least one multifunction screen (20) being configured to display at least one item of down information, said item of down information being able to comprise an item of primary information or an item of secondary information different from an item of primary information,
**characterised in that** the method comprises the following steps implemented by the display computer (30)
- determination of a transparent or opaque state of a portion (35) with adjustable opacity of said instrument panel (5),
- acquisition of said item of position information from the positioning device (40),
- when said field of view encompasses said portion (35) with adjustable opacity and when said portion (35) with adjustable opacity is in an opaque state, control of said worn display (15) according to a first head-down display mode,
- when said field of view encompasses said portion (35) with adjustable opacity and when said portion (35) with adjustable opacity is in a transparent state, control of said worn display (15) according to a second head-down display mode.

2. Method according to claim 1,
**characterised in that**, according to a first adjustment of said second head-down display mode, said display computer (30) is configured to control said portion (35) with adjustable opacity so as to display at least one said first item of primary information, said worn display (15) displaying no image.

3. Method according to either one of claims 1 to 2,
**characterised in that**, according to a second adjustment of said second head-down display mode, said portion (35) with adjustable opacity displays no image.

4. Method according to claim 3,
**characterised in that**, according to said second adjustment, said display computer (30) is configured to control said worn display (15) so as to display at least one item of primary information.

5. Method according to claim 2 and claim 3,
**characterised in that** said method includes a step of manoeuvring an interface (51) between two states corresponding respectively to the first adjustment and to the second adjustment, said method including a step of transmitting a signal from said interface (51) to said display computer (3) so as to indicate the selection of the first adjustment or the second adjustment.

6. Method according to any one of claims 1 to 5,
**characterised in that** in the first head-down display mode, said display computer (30) is configured to control said worn display (15) so as to display at least one said item of down information.

7. Method according to claim 6,
**characterised in that** said method includes a step of selection with a selector (52) for displaying said at least one item of down information to be displayed.

8. Method according to either one of claims 6 to 7,
**characterised in that** said method includes the following steps:
- determination of a state of failure of said multifunction screen (20),
- in the presence of a said failure, control with the display computer (30) of said worn display (15) according to the first head-down display mode so as to display at least one item of down information of the primary information type.

9. Method according to any one of claims 1 to 8,
**characterised in that** said method includes a step of choosing a mode of visual or instrument piloting by controlling said transparent or opaque state of said portion (35) with adjustable opacity with an opacity selector (53).

10. Aircraft (1) including a display system (10) comprising at least one worn display (15) configured to be worn integral with the head of a user in a cockpit (2) of the aircraft (1), the aircraft (1) including an instrument panel (5) visible to the user in a head-down position, the display system (10) including at least one multifunction screen (20) supported by the instrument panel (5), said display system (10) including a display computer (30), said display computer (30) being configured to control according to a head-up display mode the display on the worn display (15) of at least one item of primary information to assist piloting of the aircraft (1) when said head is in an up position, said display system (10) including a positioning device (40) determining an item of information relative to a field of view of said user, said at least one multifunction screen (20) being configured to display at least one item of down information, said item of down information being able to comprise an item of primary information or an item of secondary information different from an item of primary information,
**characterised in that** said instrument panel including a portion (35) with adjustable opacity, said display computer (30) is configured to apply the method according to any one of claims 1 to 9.

11. Aircraft according to claim 10,
**characterised in that** said aircraft (1) includes an interface (51) manoeuvrable between two states corresponding respectively to a first adjustment and a second adjustment of said second head-down display mode.

12. Aircraft according to either one of claims 10 to 11,
**characterised in that** said aircraft (1) includes a display selector (52) for selecting at least one said item of down information to be displayed on the worn display (15) in the first head-down display mode.

13. Aircraft according to any one of claims 10 to 12,
**characterised in that** said aircraft (1) includes a detector (54) of failure of said at least one multifunction screen.

14. Aircraft according to any one of claims 10 to 13,
**characterised in that** said aircraft includes an opacity selector (53) for choosing said transparent or said opaque state in flight.

15. Aircraft according to any one of claims 10 to 14,
**characterised in that** said portion (35) with adjustable opacity is arranged in front of said user in the direction of forward movement (DIRAV) of said aircraft (1).

16. Aircraft according to any one of claims 10 to 15,
**characterised in that** said at least one multifunction screen (20) is disposed on a central panel (6) of the instrument panel (5), said portion (35) with adjustable opacity being arranged laterally (DIRLAT1, DIRLAT2) with respect to the central panel (6).
